(19) Europäisches Patentamt
European Patent Office
Office européen des brevets

(11) Veröffentlichungsnummer: **0 180 817**
**A1**

(12) # EUROPÄISCHE PATENTANMELDUNG

(21) Anmeldenummer: **85113058.3**

(22) Anmeldetag: **15.10.85**

(51) Int. Cl.⁴: C 07 F 9/65
A 01 N 57/16

(30) Priorität: **27.10.84 DE 3439363**

(43) Veröffentlichungstag der Anmeldung:
**14.05.86 Patentblatt 86/20**

(84) Benannte Vertragsstaaten:
**AT BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Maurer, Fritz, Dr.**
**Roeberstrasse 8**
**D-5600 Wuppertal 1(DE)**

(72) Erfinder: **Homeyer, Bernhard, Dr.**
**Obere Strasse 28**
**D-5090 Leverkusen 3(DE)**

(54) **Phosphorsäureester.**

(57) Die vorliegende Erfindung betrifft die neuen 6-Oxo-pyrimidinylthionophosphorsäureester der Formel (I)

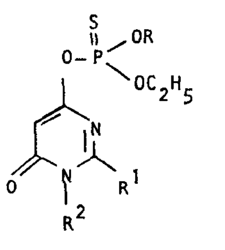

(I)

in welcher
R für i-Propyl oder sec.-Butyl steht,
$R^1$ für Wasserstoff oder Alkyl steht und
$R^2$ für Alkyl steht,
und ihre Verwendung als Schädlingsbekämpfungsmittel.

EP 0 180 817 A1

BAYER AKTIENGESELLSCHAFT 5090 Leverkusen, Bayerwerk

Konzernverwaltung RP
Patentabteilung S/Ke-c
Ib

Phosphorsäureester

Die vorliegende Erfindung betrifft neue 6-Oxo-pyrimidinylthionophosphorsäureester, Verfahren zu ihrer Herstellung und ihre Verwendung als Schädlingsbekämpfungsmittel, vorzugsweise als Insektizide und Nematizide.

Es ist bereits bekannt, daß 0,0-Dialkyl-6-oxo-pyrimidinylphosphorsäureester, wie z.B. 0,0-Diethyl-0-(1,6-dihydro-1-methyl-2-i-propyl-6-oxo-pyrimidin-4-yl)-thionophosphorsäureester, 0-Ethyl-0-n-propyl-0-(1,6-dihydro-1-methyl-2-i-propyl-6-oxo-pyrimidin-4-yl)-thionophosphorsäureester und 0,0-Diethyl-0-(1,2-diethyl-1,6-dihydro-6-oxo-pyrimidin-4-yl)-thionophosphorsäureester, insektizide Eigenschaften aufweisen (vgl. DE-OS 2 630 054 und entsprechend US-PS 4 152 426).

Es wurden nun die neuen 6-Oxo-pyrimidinylthionophosphorsäureester der Formel (I) gefunden,

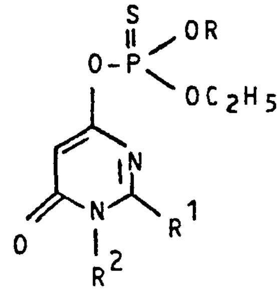

(I)

in welcher

R für i-Propyl oder sec.-Butyl steht,

$R^1$ für Wasserstoff oder Alkyl steht und

$R^2$ für Alkyl steht.

Weiterhin wurde gefunden, daß man die 6-Oxo-pyrimidinyl-thionophosphorsäureester der Formel (I) erhält, wenn man

a) Thionophosphorsäureesterhalogenide der Formel (II)

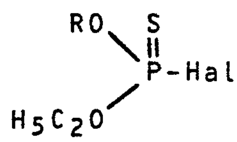

(II)

in welcher

R die oben angegebene Bedeutung hat und

Hal für Halogen, vorzugsweise Chlor steht,

mit 1,6-Dihydro-4-hydroxy-6-oxo-pyrimidinen der Formel (III)

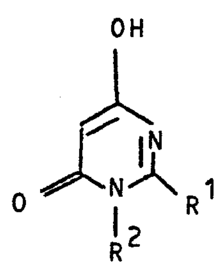

(III)

in welcher

$R^1$ und $R^2$ die oben angegebene Bedeutung haben,

gegebenenfalls in Gegenwart eines Säureakzeptors und gegebenenfalls in Gegenwart eines Lösungsmittels umsetzt oder

b) O-(6-Hydroxy-pyrimidin-4-yl)-thionophosphorsäureester der Formel (IV)

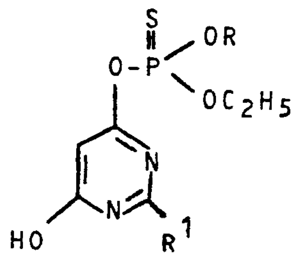

(IV)

in welcher

R und $R^1$ die oben angegebenen Bedeutungen haben,

α) mit Alkylhalogeniden der Formel (V)

$R^2$-$Hal^1$ (V)

in welcher

$R^2$ die oben angegebene Bedeutung hat und

$Hal^1$ für Halogen, vorzugsweise Brom oder Jod, steht,

oder

ß) mit Dialkylsulfaten der Formel (VI)

$$R^2\text{-O-SO}_2\text{-O-}R^2 \qquad (VI)$$

in welcher

$R^2$ die oben angegebene Bedeutung hat,

gegebenenfalls in Gegenwart eines Säureakzeptors und gegebenenfalls in Gegenwart eines Lösungsmittels umsetzt.

Überraschenderweise zeichnen sich die erfindungsgemäßen 6-Oxo-pyrimidinyl-thionophosphorsäureester der Formel (I) in überragender Weise durch eine besonders hohe und lange Wirksamkeit als Schädlingsbekämpfungsmittel, insbesondere als Insektizide und Nematizide auch bei der Bodenbehandlung aus.

Die Erfindung betrifft vorzugsweise Verbindungen der Formel (I), in welcher

R für i-Propyl oder sec.-Butyl steht,

$R^1$ für Wasserstoff oder Alkyl mit 1 bis 6 Kohlenstoffatomen steht und

$R^2$ für Alkyl mit 1 bis 6 Kohlenstoffatomen steht.

Besonders bevorzugt sind die Verbindungen der Formel (I),

in welcher

R für i-Propyl oder sec.-Butyl steht,

$R^1$ für Wasserstoff oder Alkyl mit 1 bis 4 Kohlenstoffatomen (wie Methyl, Ethyl, n-Propyl, i-Propyl, n-Butyl, i-Butyl, sec.-Butyl oder tert.-Butyl) steht und

$R^2$ für Alkyl mit 1 bis 4 Kohlenstoffatomen (wie Methyl, Ethyl, n-Propyl, i-Propyl, n-Butyl, i-Butyl, sec.-Butyl oder tert.-Butyl) steht.

Ganz besonders bevorzugt werden Verbindungen der Formel (I), in welcher

R für i-Propyl oder sec.-Butyl steht,

$R^1$ für Wasserstoff, Methyl, Ethyl oder n- und i-Propyl (vorzugsweise für Methyl, Ethyl oder i-Propyl) steht, und

$R^2$ für Methyl oder Ethyl steht.

Verwendet man beispielsweise für das erfindungsgemäße Verfahren a) O-Ethyl-O-i-propyl-thionophosphorsäurediesterchlorid und 1,6-Dihydro-4-hydroxy-1-methyl-6-oxo-pyrimidin als Ausgangsstoffe, so kann die entsprechende Reaktion durch das folgende Formelschema wiedergegeben werden:

a)

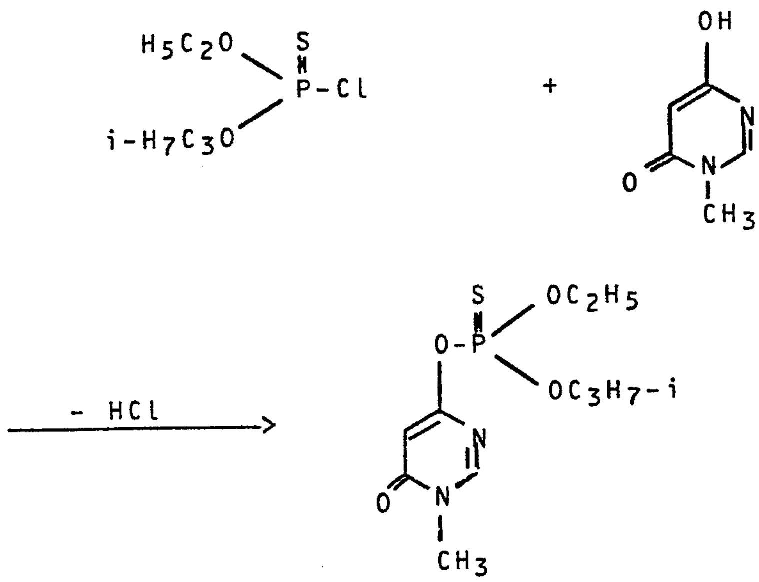


Verwendet man beispielsweise für das erfindungsgemäße Verfahren b) O-Ethyl-O-n-sec.-butyl-O-(6-hydroxy-pyrimidin-4-yl)-thionophosphorsäureester und Methyliodid als Ausgangsstoffe, so kann die entsprechende Reaktion durch das folgende Formelschema wiedergegeben werden:

b)

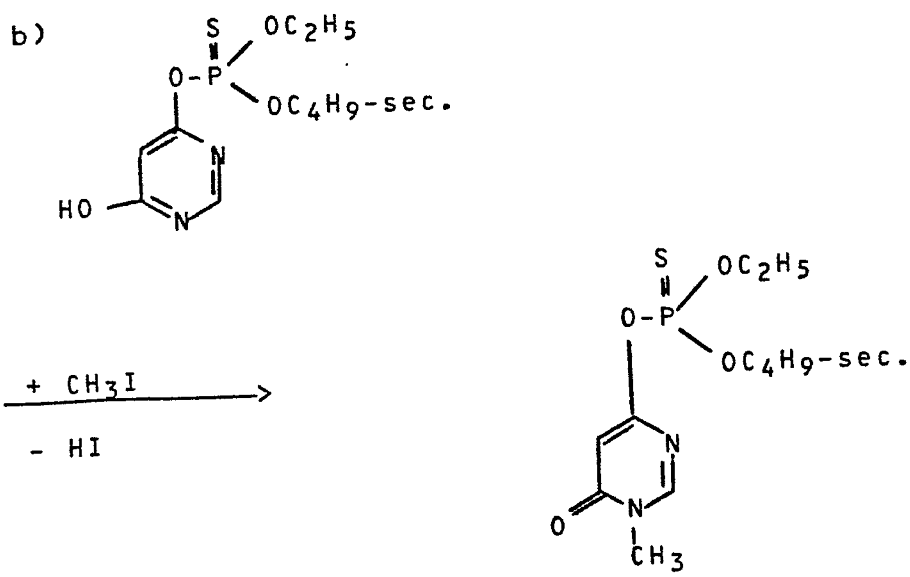

Die als Ausgangsstoffe für die Verfahrensvariante a) zu verwendenden Thionophosphorsäureesterhalognide sind durch die Formel (II) allgemein definiert. In dieser Formel hat R diejenigen Bedeutungen, welche oben bei der Definition in Formel (I) angegeben sind. Hal steht in dieser Formel für Halogen, wie Chlor, Brom und Jod, insbesondere für Chlor.

Die Verbindungen der Formel (II) sind bekannte Verbindungen der organischen Chemie.

Als Beispiele für die Verbindungen der Formel (II) seien genannt:

0-Ethyl-0-i-propyl- und 0-Ethyl-0-sec.-butyl-thionophosphorsäurediesterchlorid.

Die weiterhin als Ausgangsstoffe für die Verfahrensvariante a) zu verwendenden 1,6-Dihydro-4-hydroxy-6-oxo-pyrimidine sind durch die Formel (III) allgemein definiert. In dieser Formel haben $R^1$ und $R^2$ diejenigen Bedeutungen welche oben bei der Definition in Formel (I) angegeben sind.

Die Verbindungen der Formel (III) sind bekannt und/oder können nach allgemein bekannten Verfahren und Methoden hergestellt werden (vgl. z.B. DE-OS 2 630 054 und US-PS 4 152 426).

Als Beispiele für die Verbindungen der Formel (III) seien genannt:

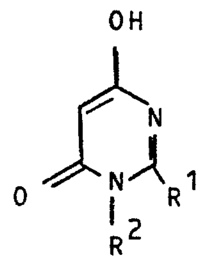

(III)

Tabelle 1

| $R^1$ | $R^2$ | $R^1$ | $R^2$ |
|---|---|---|---|
| H | $CH_3$ | $C_2H_5$ | $CH_3$ |
| H | $C_2H_5$ | $C_2H_5$ | $C_2H_5$ |
| H | n-$C_3H_7$ | $C_2H_5$ | n-$C_3H_7$ |
| H | i-$C_3H_7$ | $C_2H_5$ | i-$C_3H_7$ |
| H | n-$C_4H_9$ | $C_2H_5$ | n-$C_4H_9$ |
| H | i-$C_4H_9$ | $C_2H_5$ | i-$C_4H_9$ |
| H | sec.-$C_4H_9$ | $C_2H_5$ | sec.-$C_4H_9$ |
| H | tert.-$C_4H_9$ | $C_2H_5$ | tert.-$C_4H_9$ |
| $CH_3$ | $CH_3$ | n-$C_3H_7$ | $CH_3$ |
| $CH_3$ | $C_2H_5$ | n-$C_3H_7$ | $C_2H_5$ |
| $CH_3$ | n-$C_3H_7$ | n-$C_3H_7$ | n-$C_3H_7$ |
| $CH_3$ | i-$C_3H_7$ | n-$C_3H_7$ | i-$C_3H_7$ |
| $CH_3$ | n-$C_4H_9$ | n-$C_3H_7$ | n-$C_4H_9$ |
| $CH_3$ | i-$C_4H_9$ | n-$C_3H_7$ | i-$C_4H_9$ |
| $CH_3$ | sec.-$C_4H_9$ | n-$C_3H_7$ | sec.-$C_4H_9$ |
| $CH_3$ | tert.-$C_4H_9$ | n-$C_3H_7$ | tert.-$C_4H_9$ |

Tabelle 1 - Fortsetzung

| $R^1$ | $R^2$ | $R^1$ | $R^2$ |
|---|---|---|---|
| i-$C_3H_7$ | $CH_3$ | sec.-$C_4H_9$ | n-$C_4H_9$ |
| i-$C_3H_7$ | $C_2H_5$ | sec.-$C_4H_9$ | i-$C_4H_9$ |
| i-$C_3H_7$ | n-$C_3H_7$ | sec.-$C_4H_9$ | sec.-$C_4H_9$ |
| i-$C_3H_7$ | i-$C_3H_7$ | sec.-$C_4H_9$ | tert.-$C_4H_9$ |
| i-$C_3H_7$ | n-$C_4H_9$ | tert.-$C_4H_9$ | $CH_3$ |
| i-$C_3H_7$ | i-$C_4H_9$ | tert.-$C_4H_9$ | $C_2H_5$ |
| i-$C_3H_7$ | sec.-$C_4H_9$ | tert.-$C_4H_9$ | n-$C_3H_7$ |
| i-$C_3H_7$ | tert.-$C_4H_9$ | tert.-$C_4H_9$ | i-$C_3H_7$ |
| sec.-$C_4H_9$ | $CH_3$ | tert.-$C_4H_9$ | n-$C_4H_9$ |
| sec.-$C_4H_9$ | $C_2H_5$ | tert.-$C_4H_9$ | i-$C_4H_9$ |
| sec.-$C_4H_9$ | n-$C_3H_7$ | tert.-$C_4H_9$ | sec.-$C_4H_9$ |
| sec.-$C_4H_9$ | i-$C_3H_7$ | tert.-$C_4H_9$ | tert.-$C_4H_9$ |

Die für die Verfahrensvariante b) als Ausgangsstoffe zu verwendenden O-(6-Hydroxy-pyrimidin-4-yl)-thionophosphorsäureester sind durch die Formel (IV) allgemein definiert. In dieser Formel haben R und $R^1$ diejenigen Bedeutungen, welche oben bei der Definition in Formel (I) angegeben sind.

Die Verbindungen der Formel (IV) können nach allgemein üblichen Verfahren hergestellt werden indem man z.B. 4,6-Dihydroxypyrimidine der Formel (VII)

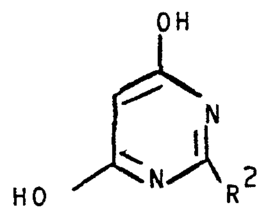

(VII)

in welcher

$R^2$ die oben angegebene Bedeutung hat,

mit Thionophosphorsäureesterhalogeniden der Formel (II), gegebenenfalls in Gegenwart von Säureakzeptoren, wie z.B. Triethylamin und gegebenenfalls in Gegenwart von Verdünnungsmitteln, wie z.B. Methylenchlorid, bei Temperaturen zwischen 0°C und 60°C umsetzt.

Die Verbindungen der Formel (VII) sind bekannte Verbindungen der organischen Chemie.

Als Beispiele für die Verbindungen der Formel (IV) seien genannt:

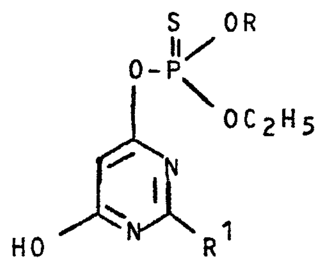

(IV)

Tabelle 2

| R | $R^1$ | R | $R^1$ |
|---|---|---|---|
| $i-C_3H_7$ | H | $sec.-C_4H_9$ | H |
| $i-C_3H_7$ | $CH_3$ | $sec.-C_4H_9$ | $CH_3$ |
| $i-C_3H_7$ | $C_2H_5$ | $sec.-C_4H_9$ | $C_2H_5$ |
| $i-C_3H_7$ | $n-C_3H_7$ | $sec.-C_4H_9$ | $n-C_3H_7$ |
| $i-C_3H_7$ | $i-C_3H_7$ | $sec.-C_4H_9$ | $i-C_3H_7$ |
| $i-C_3H_7$ | $n-C_4H_9$ | $sec.-C_4H_9$ | $n-C_4H_9$ |
| $i-C_3H_7$ | $i-C_4H_9$ | $sec.-C_4H_9$ | $i-C_4H_9$ |
| $i-C_3H_7$ | $sec.-C_4H_9$ | $sec.-C_4H_9$ | $sec.-C_4H_9$ |
| $i-C_3H_7$ | $tert.-C_4H_9$ | $sec.-C_4H_9$ | $tert.-C_4H_9$ |

Die weiterhin für die Verfahrensvariante b/$\alpha$) oder b/ß) zu verwendenden Alkylhalogenide oder Dialkylsulfate sind durch die Formel (V) bzw. (VI) allgemein definiert. In dieser Formel hat $R^2$ diejenigen Bedeutungen, welche oben bei der Definition in Formel (I) angegeben sind.

Als Beispiele für die Verbindungen der Formel (V) seien genannt: Methyl-, Ethyl-, n-Propyl-, i-Propyl-, n-Butyl-, i-Butyl-, sec.-Butyl- und tert.-Butyl-chlorid bzw. -bromid.

Als Beispiele für die Verbindungen der Formel (VI) seien genannt: Dimethyl-, Diethyl- und Di-n-propylsulfat.

Die Verbindungen der Formel (V) und (VI) sind bekannte Verbindungen der organischen Chemie.

Die erfindungsgemäßen Verfahrensvarianten a) und b) zur Herstellung der neuen Verbindungen der Formel (I) werden bevorzugt unter Verwendung von Verdünnungsmitteln durchgeführt. Als Verdünnungsmittel kommen praktisch alle inerten Lösungsmittel infrage.

Hierzu gehören insbesondere aliphatische und aromatische gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol, o-Dichlorbenzol, Ether wie Diethyl- und Dibutylether, Glycoldimethylether und Diglycoldimethylether,

Tetrahydrofuran und Dioxan, Ketone, wie Aceton, Methylethyl-, Methylisopropyl- und Methylisobutylketon, Ester, wie Essigsäuremethylester und -ethylester, Nitrile, wie z.B. Acetonitril und Propionitril, Amide, wie z.B. Dimethylformamid, Dimethylacetamid, N-Methylpyrrolidon, sowie Dimethylsulfoxid, Tetramethylensulfon und Hexamethylphosphorsäuretriamid.

Die erfindungsgemäßen Verfahrensvarianten a) und b) können gegebenenfalls in Gegenwart von Säureakzeptoren durchgeführt werden. Als Säureakzeptoren können alle üblichen Säurebindemittel Verwendung finden. Besonders bewährt haben sich Alkalicarbonate und -alkoholate, wie Natrium- und Kaliumcarbonat, Erdalkalioxide und -hydroxide, wie Magnesiumoxid und Calciumhydroxid, Alkalihydride, wie Natriumhydrid, ferner aliphatische, aromatische oder heterocyclische Amine, beispielsweise Triethylamin, Trimethylamin, Dimethylanilin, Dimethylbenzylamin und Pyridin.

Die erfindungsgemäßen Verfahrensvarianten a) und b) werden im allgemeinen bei Temperaturen zwischen 0°C und 100°C durchgeführt. Bevorzugt wird der Bereich zwischen 20°C und 80°C. Die Umsetzungen werden im allgemeinen bei Normaldruck durchgeführt.

Zur Durchführung der Verfahrensvariante a) setzt man die Ausgangsstoffe vorzugsweise im äquimolaren Verhältnis ein. Ein Überschuß der einen oder anderen

Komponente bringt keine wesentlichen Vorteile. Die Reaktionspartner werden im allgemeinen in einem der angegebenen Lösungsmittel vereinigt und meist bei erhöhter Temperatur zur Vervollständigung der Umsetzung eine oder mehrere Stunden gerührt.

Danach fügt man ein organisches Lösungsmittel, z.B. Toluol zum Reaktionsgemisch und arbeitet die organische Phase nach üblichen Methoden durch Waschen, Trocknen und Abdestillieren des Lösungsmittels auf.

Bei der Verfahrensvariante b) wird das Alkylhalogenid der Formel (V) bzw. das Dialkylsulfat der Formel (VI) vorzugsweise in 10 bis 15 %igem Überschuß eingesetzt. Die Reaktionsdurchführung und Aufarbeitung erfolgt wie bei Variante a) beschrieben.

Die neuen Verbindungen fallen oft in Form von Ölen an, die sich meist nicht unzersetzt destillieren lassen, jedoch durch sogenanntes 'Andestillieren', d.h. durch längeres Erhitzen unter vermindertem Druck auf mäßig erhöhte Temperaturen von den letzten flüchtigen Anteilen befreit und auf diese Weise gereinigt werden können. Zu ihrer Charakterisierung dient der Brechungsindex.

Die Wirkstoffe eignen sich bei guter Pflanzenverträglichkeit und günstiger Warmblütertoxizität zur Bekämpfung von tierischen Schädlingen, insbesondere Insekten, Spinnentieren und Nematoden, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.

Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..

Aus der Ordnung der Arachnida z.B. Scorpio maurus, Latrodectus mactans.

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie

Gummiarabicum, Polyvinylalkohol, Polyvinylacetat, sowie natürliche Phospholipide, wie Kephaline und Lecithine und synthetische Phospholipide. Weitere Additve können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Die erfindungsgemäßen Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die erfindungsgemäßen Wirkstoffe der Formel (I) zeichnen sich durch hervorragende insektizide und nematizide Wirksamkeit aus. Sie zeigen insbesondere beim Einsatz als Bodeninsektizide eine hervorragende Wirkung und eine lange Wirksamkeit gegen Larven wie z.B. Diabrotica balteata und Phaedon cochleariae und gegen Blattläuse wie z.B. Myzus persicae. Sie besitzen außerdem eine ausgezeichnete Wirksamkeit gegen Nematoden wie z.B. Meloidogyne incognita und Globodera rostochiensis.

Diese Verbindungen können auch als Blattinsektizide, Akarizide und gegen Hygiene- und Vorratsschädlinge eingesetzt werden.

Die Herstellung der erfindungsgemäßen Verbindungen soll durch die folgenden Beispiele erläutert werden:

Beispiel 1

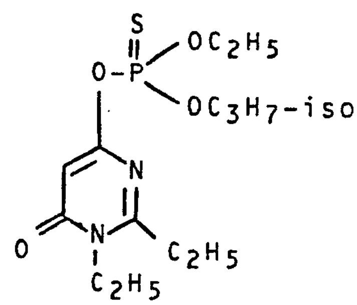

(Verfahren a)

Eine Mischung aus 16,8 g (0,1 Mol) 1,6-Dihydro-1,2-diethyl-4-hydroxy-6-oxo-pyrimidin (Darstellung siehe DE-OS 2 630 054), 20,7 g (0,15 Mol) Kaliumcarbonat, 20,2 g (0,1 Mol) O-Ethyl-O-i-propyl-thionophosphorsäurediesterchlorid und 200 ml Acetonitril wird 4 Stunden bei 60°C gerührt. Nach Zugabe von 300 ml Toluol wird zweimal mit je 200 ml Wasser extrahiert, die organische Phase über Natriumsulfat getrocknet und das Lösungsmittel im Vakuum abdestilliert. Der Rückstand wird im Hochvakuum bei 80°C andestilliert.

Man erhält auf diese Weise 26,2 g (79 % der Theorie) O-Ethyl-O-i-propyl-O-(1,2-diethyl-1,6-dihydro-6-oxo-pyrimidin-4-yl)-thionophosphorsäureester in Form eines beigen Öles mit dem Brechungsindex $n_D^{22}$: 1,5080.

Beispiel 2

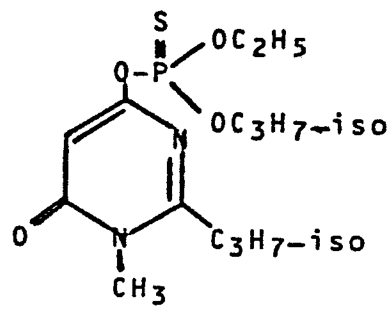

(Verfahren b)

Zu einer Mischung aus 16 g (0,05 Mol) O-Ethyl-O-i-propyl-O-(1,6-dihydro-2-i-propyl-6-oxo-pyrimidin-4-yl)-thionophosphorsäureester, 10,3 g (0,075 Mol) Kaliumcarbonat und 150 ml Acetonitril werden bei 20°C 8,3 g (0,058 Mol) Methyliodid getropft. Dann wird das Reaktionsgemisch 3 Stunden bei 45°C nachgerührt, 300 ml Toluol zugegeben und zweimal mit je 150 ml Wasser extrahiert. Die organische Phase wird über Natriumsulfat getrocknet und im Vakuum eingedampft. Der Rückstand wird bei 70°C im Hochvakuum andestilliert.

Man erhält so 15,6 g (93 % der Theorie) O-Ethyl-O-i-propyl-O-(1,6-dihydro-1-methyl-2-i-propyl-6-oxo-pyrimidin-4-yl)-thionophosphorsäureester in Form eines gelben Öles mit dem Brechungsindex $n_D^{22}$: 1,5069.

Analog einem der beiden Beispiele 1 oder 2 können z.B. die folgenden Verbindungen der Formel

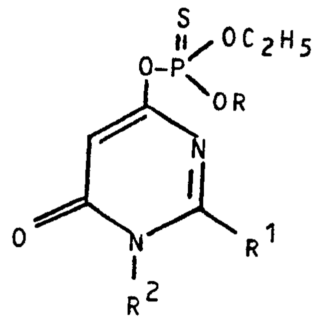

(I)

hergestellt werden:

Tabelle 3

| Bsp. Nr. | R | $R^1$ | $R^2$ | Ausb. [% d. Th.] | Brechungs-index |
|---|---|---|---|---|---|
| 3 | sec.-$C_4H_9$ | $C_2H_5$ | $C_2H_5$ | 63 | $n_D^{22}$: 1,5109 |
| 4 | sec.-$C_4H_9$ | i-$C_3H_7$ | $CH_3$ | 58 | $n_D^{22}$: 1,5139 |
| 5 | i-$C_3H_7$ | $CH_3$ | $CH_3$ | | |
| 6 | sec.-$C_4H_9$ | $CH_3$ | $CH_3$ | | |
| 7 | i-$C_3H_7$ | H | $CH_3$ | | |
| 8 | sec.-$C_4H_9$ | H | $CH_3$ | | |

Ausgangsstoffe der Formel (IV)

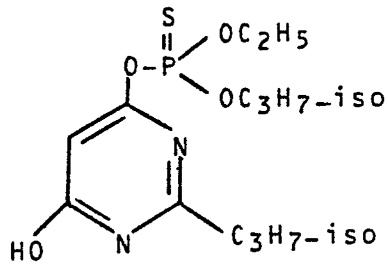

Eine Mischung aus 11,2 g (0,06 Mol) 2-Isopropyl-4,6-dihydroxy-pyrimidin, 7,6 g (0,075 Mol) Triethylamin und 60 ml Methylenchlorid wird eine Stunde bei 20°C gerührt und dann bei 5 bis 10°C mit 12,6 g (0,06 Mol) O-Ethyl-O-i-propyl-thionophosphorsäurediesterchlorid versetzt. Das Reaktionsgemisch wird 18 Stunden bei Raumtemperatur gerührt und dann im Vakuum eingedampft. Der Rückstand wird mit 200 ml Toluol versetzt und zweimal mit je 100 ml Wasser extrahiert. Die organische Phase wird über Natriumsulfat getrocknet und im Vakuum eingedampft.

Man erhält 13,8 g (72 % der Theorie) O-Ethyl-O-i-propyl-O-(2-i-propyl-6-hydroxy-pyrimidin-4-yl)-thionophosphorsäureester in Form farbloser Kristalle mit dem Schmelzpunkt 58°C.

Die Wirksamkeit der erfindungsgemäßen Verbindungen soll durch die folgenden Beispiele erläutert werden:

In den folgenden Verwendungsbeispielen wurden die folgenden Verbindungen als Vergleichssubstanzen eingesetzt:

(A) 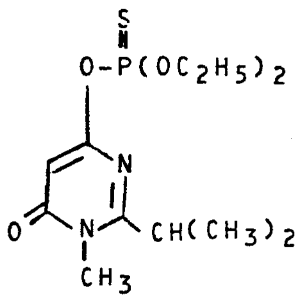

(B) 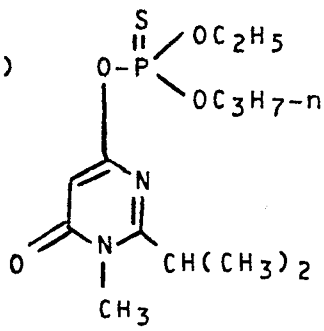

(C) 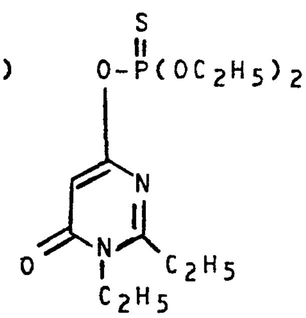

(bekannt aus DE-OS 2 630 054 entsprechend US-PS 4 152 426).

0180817

Beispiel A

Grenzkonzentrations-Test / Bodeninsekten

Testinsekt: Phorbia antiqua-Maden (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Tabelle A

Bodeninsektizide

Phorbia antiqua-Maden im Boden

| Wirkstoff | Abtötungsgrad in % bei einer Wirkstoffkonzentration von 5 ppm |
|---|---|
| 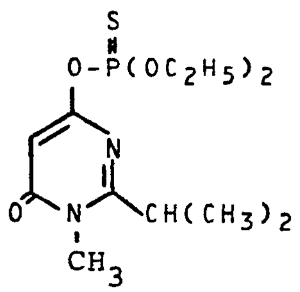 (bekannt) (A) | 0 |
| 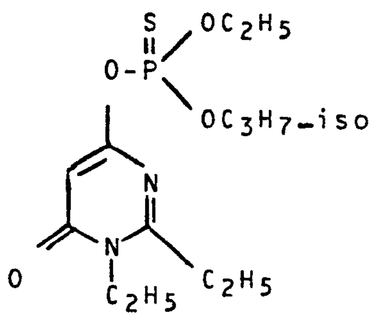 (1) | 100 |
| 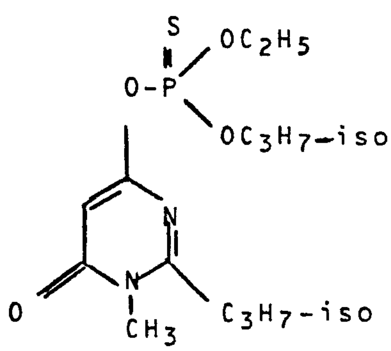 (2) | 100 |

Beispiel B

Grenzkonzentrationstest / Bodeninsekten

Testinsekt: Diabrotica balteata - Larven im Boden
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration. Die Wirkstoffzubereitung wird innig mit dem Boden vermischt. Dabei spielt die Konzentration des Wirkstoffes in der Zubereitung praktisch keine Rolle, entsprechend ist allein die Wirkstoffgewichtsmenge pro Volumeneinheit Boden, welche in ppm (mg/l) angegeben wird. Man füllt den Boden in 0,5 l Töpfe und läßt diese bei 20°C stehen.

Sofort nach dem Ansatz werden je Topf 6 vorgekeimte Maiskörner gelegt. Nach 2 Tagen werden in den behandelten Boden die entsprechenden Testinsekten gesetzt. Nach weiteren 7 Tagen wird der Wirkungsgrad des Wirkstoffes durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie in der unbehandelten Kontrolle.

Tabelle B

Bodeninsektizide

Diabrotica balteata

| Wirkstoff | Abtötungsgrad in % bei einer Wirkstoffkonzentration von 5 ppm |
|---|---|
| (A) 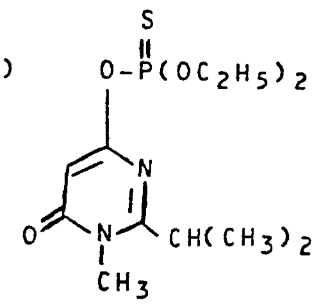 (bekannt) | 0 |
| (B) 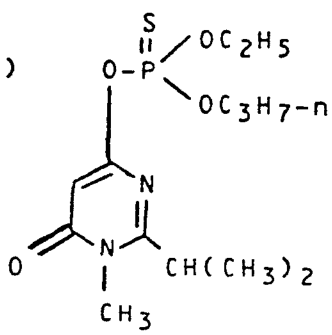 (bekannt) | 0 |
| (C) 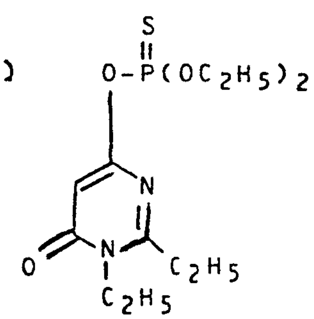 (bekannt) | 0 |

Tabelle B

Bodeninsektizide

Diabrotica balteata

| Wirkstoff | Abtötungsgrad in % bei einer Wirkstoffkonzentration von 5 ppm |
|---|---|
| 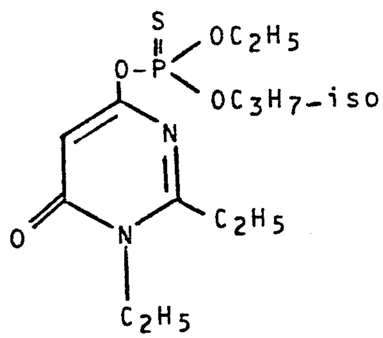 (1) | 95 |
| 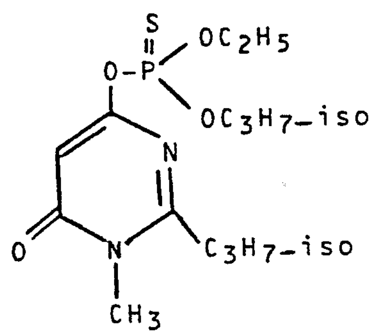 (2) | 100 |

Beispiel C

Grenzkonzentrations-Test / Wurzelsystemische Wirkung

Testinsekt: Phaedon cochleariae
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle

Testtiere abgetötet sind und 0 %, wenn noch genau so viele Testinsekten leben wie bei der unbehandelten Kontrolle.

Tabelle C

Wurzelsystemische Wirkung

Phaedon cochleriae Larven

| Wirkstoff | Abtötungsgrad in % bei einer Wirkstoffkonzentration von 5 ppm |
|---|---|
| (A) 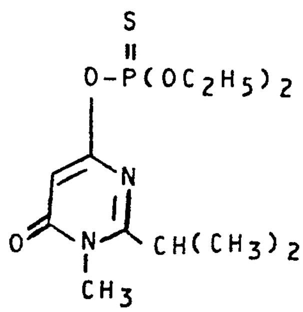 (bekannt) | 0 |
| (B) 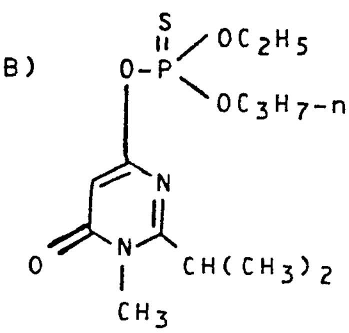 (bekannt) | 0 |
| (C) 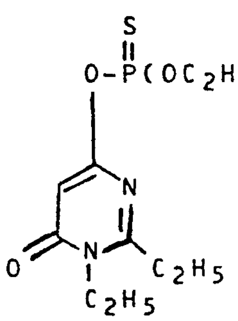 (bekannt) | 0 |

Tabelle C

Wurzelsystemische Wirkung

Phaedon cochleriae Larven

| Wirkstoff | Abtötungsgrad in % bei einer Wirkstoffkonzentration von 5 ppm |
|---|---|
| 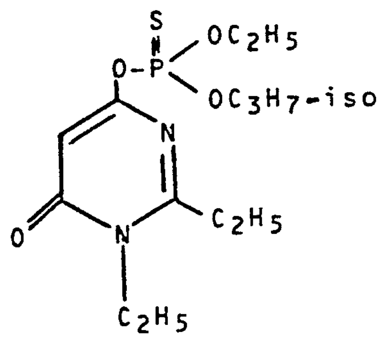 (1) | 100 |
| 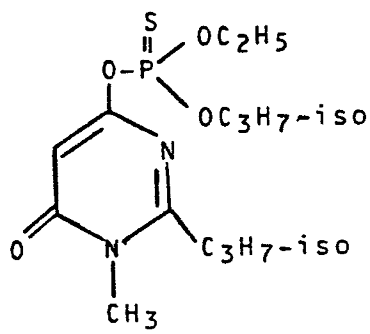 (2) | 95 |

Beispiel D

Grenzkonzentrations-Test / Wurzelsystemische Wirkung

Testinsekt: Myzus persicae
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt. Dabei spielt die Konzentration des Wirkstoffs in der Zubereitung praktisch keine Rolle, entscheidend ist allein die Wirkstoffgewichtsmenge pro Volumeneinheit Boden, welche in ppm (= mg/l) angegeben wird. Man füllt den behandelten Boden in Töpfe und bepflanzt diese mit Kohl (Brassica oleracea). Der Wirkstoff kann so von den Pflanzenwurzeln aus dem Boden aufgenommen und in die Blätter transportiert werden.

Für den Nachweis des wurzelsystemischen Effektes werden nach 7 Tagen ausschließlich die Blätter mit den obengenannten Testtieren besetzt. Nach weiteren 2 Tagen erfolgt die Auswertung durch Zählen oder Schätzen der toten Tiere. Aus den Abtötungszahlen wird die wurzelsystemische Wirkung des Wirkstoffs abgeleitet. Sie ist 100 %, wenn alle Testtiere abgetötet sind und 0 %, wenn noch genau so viele Testinsekten leben wie bei der unbehandelten Kontrolle.

## Tabelle D

### Wurzelsystemische Wirkung

### Myzus Persicae

| Wirkstoff | Abtötungsgrad in % bei einer Wirkstoffkonzentration von 5 ppm |
|---|---|
| (A) 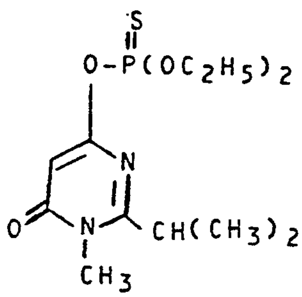 (bekannt) | 0 |
| (B) 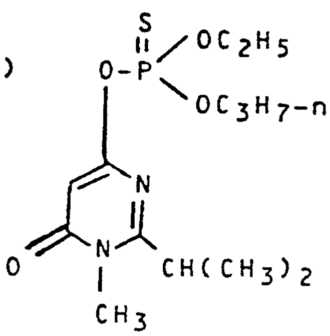 (bekannt) | 0 |
| (C) 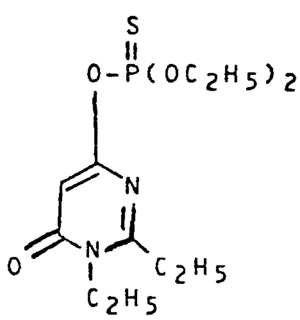 (bekannt) | 0 |

Tabelle D

Wurzelsystemische Wirkung

Myzus Persicae

| Wirkstoff | Abtötungsgrad in % bei einer Wirkstoffkonzentration von 5 ppm |
| --- | --- |
| 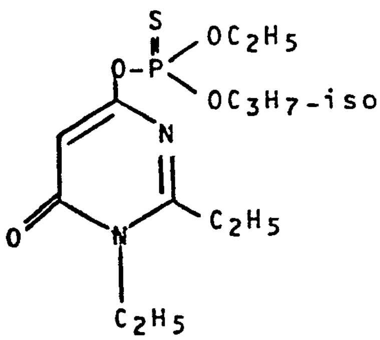 (1) | 100 |
| 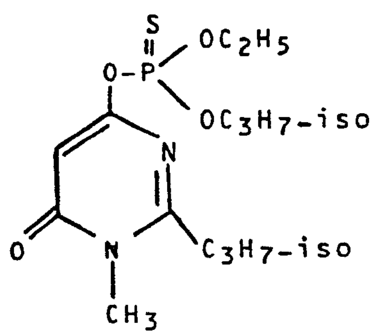 (2) | 95 |

Beispiel E

Grenzkonzentrations-Test / Nematoden

Testnematode: Meloidogyne incognita
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27°C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Tabelle E

Nematizide

Meloidogyne incognita

| Wirkstoff | Abtötungsgrad in % bei einer Wirkstoffkonzentration von 2,5 ppm |
| --- | --- |
| (B) 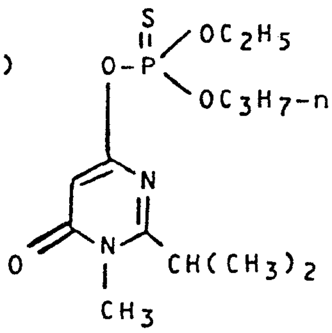 (bekannt) | 0 |
| (C) 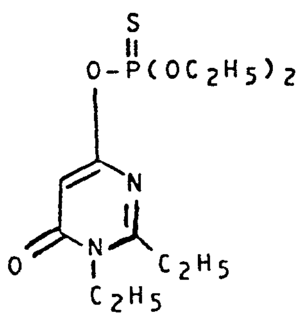 (bekannt) | 0 |
| 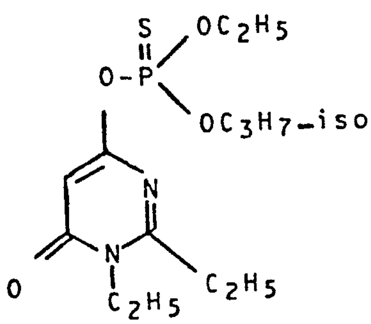 (1) | 100 |

Tabelle E

Nematizide

Meloidogyne incognita

| Wirkstoff | Abtötungsgrad in % bei einer Wirkstoffkonzentration von 2,5 ppm |
| --- | --- |
| 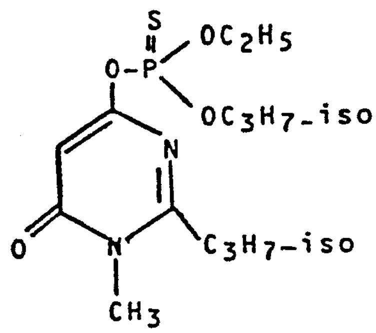<br>(2) | 100 |

Beispiel F

Grenzkonzentrations-Test

Testnematode: Globodera rostochiensis
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, pflanzt Kartoffeln ein und hält die Töpfe bei einer Gewächshaus-Temperatur von 18°C.

Nach sechs Wochen werden die Kartoffelwurzeln auf Zysten untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Tabelle F

Nematizide

*Globodera rostochiensis*

| Wirkstoff | Abtötungsgrad in % bei einer Wirkstoffkonzentration von 1,25 ppm |
| --- | --- |
| 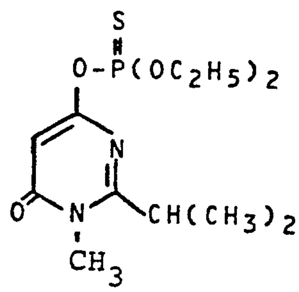 (bekannt) (A) | 30 |
| 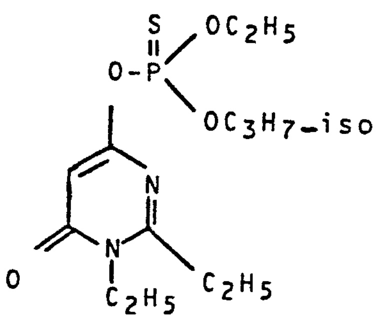 (1) | 95 |
| 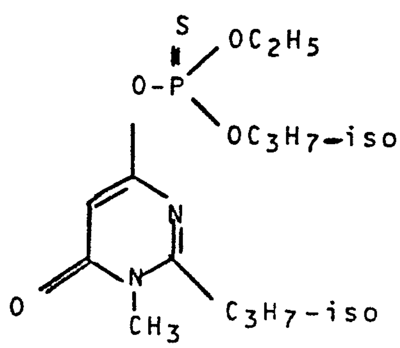 (2) | 95 |

Patentansprüche

1. Verbindungen der Formel (I)

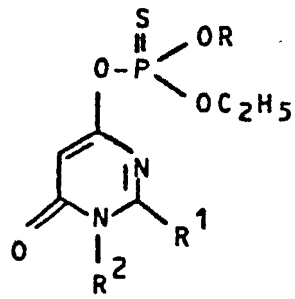

(I)

in welcher

R für i-Propyl oder sec.-Butyl steht,

$R^1$ für Wasserstoff oder Alkyl steht und

$R^2$ für Alkyl steht.

2. Verbindungen gemäß Anspruch 1, wobei in Formel (I)

R für i-Propyl oder sec.-Butyl steht,

$R^1$ für Wasserstoff oder Alkyl mit 1 bis 6 Kohlenstoffatomen steht und

$R^2$ für Alkyl mit 1 bis 6 Kohlenstoffatomen steht.

3. Verbindungen gemäß Anspruch 1, wobei in Formel (I)

R für i-Propyl oder sec.-Butyl steht,

$R^1$ für Wasserstoff oder Alkyl mit 1 bis 4 Kohlenstoffatomen steht, und

$R^2$ für Alkyl mit 1 bis 4 Kohlenstoffatomen steht.

4. Verbindung der Formel

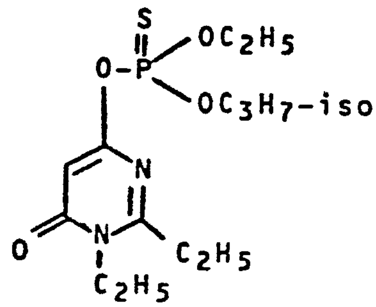

5. Verbindung der Formel

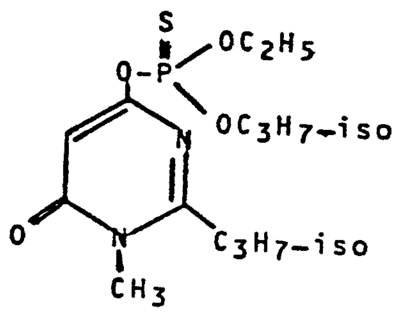

6. Verfahren zur Herstellung der Verbindungen der Formel (I)

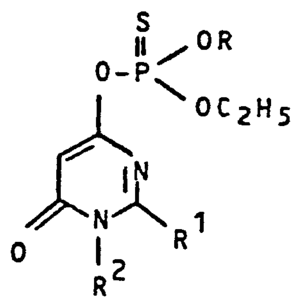

(I)

in welcher

R für i-Propyl oder sec.-Butyl steht,

$R^1$ für Wasserstoff oder Alkyl steht und

$R^2$ für Alkyl steht,

dadurch gekennzeichnet, daß man

a) Thionophosphorsäureesterhalogenide der Formel (II)

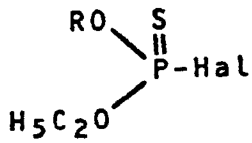

(II)

in welcher

R die oben angegebene Bedeutung hat und

Hal für Halogen, vorzugsweise Chlor steht,

mit 1,6-Dihydro-4-hydroxy-6-oxo-pyrimidinen der Formel (III)

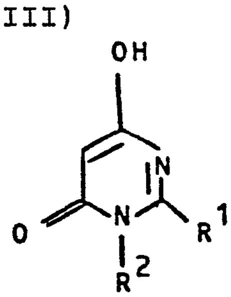

(III)

in welcher

$R^1$ und $R^2$ die oben angegebene Bedeutung haben,

gegebenenfalls in Gegenwart eines Säureakzeptors und gegebenenfalls in Gegenwart eines Lösungsmittels umsetzt oder

b) O-(6-Hydroxy-pyrimidin-4-yl)-thinophosphorsäureester der Formel (IV)

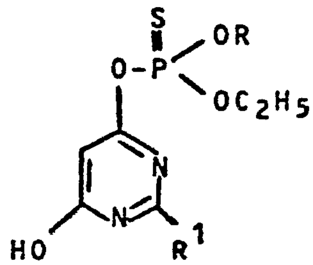

(IV)

in welcher

R und $R^1$ die oben angegebenen Bedeutungen haben,

α) mit Alkylhalogeniden der Formel (V)

$$R^2\text{-Hal}^1 \qquad (V)$$

in welcher

$R^2$ die oben angegebene Bedeutung hat und

$Hal^1$ für Halogen, vorzugsweise Brom oder Jod steht, oder

ß) mit Dialkylsulfaten der Formel (VI)

$$R^2\text{-O-SO}_2\text{-O-R}^2 \qquad (VI)$$

in welcher

$R^2$ die oben angegebene Bedeutung hat,

gegebenenfalls in Gegenwart eines Säureakzeptors und gegebenenfalls in Gegenwart eines Lösungsmittels umsetzt.

7. Schädlingsbekämpfungsmittel, gekennzeichnet durch einen Gehalt an mindestens einer Verbindung der Formel (I) gemäß Anspruch 1 oder 6.

8. Verwendung von Verbindungen der Formel (I) gemäß Anspruch 1 oder 6 zur Bekämpfung von Schädlingen, insbesondere Insekten und Nematoden.

9. Verfahren zur Bekämpfung von Schädlingen, dadurch gekennzeichnet, daß man Verbindungen der Formel (I) gemäß Anspruch 1 oder 6 auf die Schädlinge, vorzugsweise Insekten und Nematoden oder ihren Lebensraum einwirken läßt.

10. Verfahren zur Herstellung von Schädlingsbekämpfungsmitteln, dadurch gekennzeichnet, daß man Verbindungen der Formel (I) gemäß Anspruch 1 oder 6 mit Streckmitteln und/oder oberflächenaktiven Mitteln vermischt.

0180817

Europäisches Patentamt

**EUROPÄISCHER RECHERCHENBERICHT**

Nummer der Anmeldung

EP 85 11 3058

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X,D | DE-A-2 630 054 (BAYER) * Ansprüche 1-6 * | 1-10 | C 07 F 9/65 A 01 N 57/16 |
| A | DE-A-2 722 402 (BAYER) * Ansprüche 1, 2 * | 1,6 | |
| A | DE-A-2 709 908 (BAYER) * Anspruch 2 * | 1 | |
| | | | RECHERCHIERTE SACHGEBIETE (Int. Cl 4) |
| | | | C 07 F 9/65 |

Der vorliegende Recherchenbericht wurde für alle Patentansprüche erstellt.

| Recherchenort | Abschlußdatum der Recherche | Prüfer |
|---|---|---|
| BERLIN | 15-01-1986 | KAPTEYN H G |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82